# EUROPEAN PATENT APPLICATION

(11) **EP 2 628 390 A2**
(43) Date of publication of application: **21.08.2013**
(21) Application number: 13155148.3
(22) Date of filing: 14.02.2013
(51) Int. Cl.: A21C 11/12, B05B 1/30

(54) **Water jet nozzle with air actuation**

(30) Priority: 15.02.2012 ES 201230233
(71) Applicant: Mirrioter, S.L., 20800 Zarautz (ES)
(72) Inventor: Rioja Iribarren, Luis Maria, Zarautz (Guipuzcoa) (ES)
(74) Representative: Gulde Hengelhaupt Ziebig & Schneider

(57) **Abstract**

Water jet nozzle with air actuation to make cuts in loaves of bread by means of a water jet in which said cutting nuzzle (10) has a central body (11) with horizontally opposite air inlet (13) and pressurized water inlet (12), through which the pressurized water (18) is permanently in the water chamber (23) and is susceptible of flowing through the mouth (17) after the cutting nozzle (10) receives an actuating air impulse (22) in the air piston (16a), joined in a solidary manner by means of a piston rod (16b) to the closing piston (16).

## Description

### FIELD OF THE INVENTION

This invention concerns a water jet nozzle with air maneuver, which is specially designed to make the cuts in loaves of bread by means of a water jet prior to the final baking thereof.

### STATE OF THE PREVIOUS ART

In general, loaves of bread incorporate a series of cuts in their surface, which, depending on the type of bread, usually acquire different shapes and sizes. The purpose of the execution of these superficial cuts, which are made in the fermented dough prior to the final baking, is the correct evacuation of the gases existing in the fermented dough to the exterior thereof during the baking process, in order to obtain loaves of bread that are uniform and aesthetically attractive to the consumer.

Baking facilities usually use automatized mechanical process wherein the baking sheets containing the breads are located below a series of blades, which make these cuts on the surfaces of the bread. This system presents multiple problems, such as: a limited speed of production, the elevated maintenance costs of the blades due to the frequent breakage thereof, the frequent adherence of the bread dough to the blades, leading to production stoppages, the limited creation of different types of cuts, the irregularity of the depth of the cuts and the high possibility of accidents in the management of the blades.

Nowadays, this mechanical surface cutting can be replaced by water jet cutting, which is carried out by means of cutting nozzles similar to the nozzles incorporated by painting spray guns. The opening and closing of the water cutting jet, which will have an influence on the loaves of bread, is carried out by means of nozzles with an incorporated electrovalve, due to which each one of these nozzles needs its own electric supply and installation. In addition to the large size of the aforementioned nozzle, its elevated cost and complicated installation and operation make the large majority of baking companies unable to afford them.

### EXPLANATION OF THE INVENTION AND ADVANTAGES

This being so, the invention before us proposes a water jet nozzle with air maneuver to make cuts in loaves of bread by means of a water jet and consists of a cutting nozzle having a central body with a horizontally opposed air inlet and pressurized water inlet, through which the pressurized water is permanently in the water chamber and is susceptible of flowing through the mouth when it receives an actuating air impulse in the air piston, joined in a solidary manner by means of a piston rod to the closing piston.

The operation of these elements of the water-cutting nozzle is simple. There is a permanent flow of water through one of the structural branches, and when an actuating air impulse is introduced through the supplying structural branch, it displaces the air piston joined in a solidary manner by means a piston rod to the closing piston, and therefore, the closing piston ascends, allowing the water-cutting jet to be projected through the mouth to the loaf of bread.

It should be noted that this type of cutting nozzle elements work at a pressure of 5 to 10 kg/cm², a pressure that is amply sufficient to make surface cuts in loaves of bread. In addition, we should mention the low water consumption of the cutting nozzle elements, since cuts may be made in about 400 loaves of bread with one liter of water.

Due to all of the foregoing, we have a water-cutting nozzle element at a low cost, with a reduced size that allows generating multiple arm structures and with a simple and reliable operation.

In addition, this type of nozzle does not require individual electrovalves for its actuation and may be coupled to the different automatic bread-cutting machines existing in the market.

Another characteristic of the invention is that it incorporates a water filter in the pressurized water inlet.

Another characteristic of the invention is that the closing piston incorporates an o-ring to seal the water chamber.

Another technical particularity of the invention is that the pressurized water inlet is extended in a attached water conduct and that the air inlet is extended in the respective attached air conduct, both of which end in their respective water coupling fitting and air coupling fitting. This configuration of pressurized water inlets and air inlets provided with water coupling fittings and air coupling fittings allow the quick and easy substitution of any defective nozzle. Said extensions of the pressurized water inlet and air inlet allow the use of different water fittings and air fittings for their adaptation to the water and air supply, so the nozzles may be used in the automatic bread-cutting machines already existing in industrial baking companies.

In another order of ideas, the invention contemplates that the central body incorporates elastic pins susceptible of fitting in the base of the nozzle of supplementary configuration existing at the possible installation sites. An advantage of this configuration is that it allows the quick substitution of the cutting nozzle in the case of failures.

This device envisages an execution of a cutting nozzle constituted by a central body that is fitted between the water supplying branch and the air supplying branch, in correspondence with the horizontally opposite pressurized water inlet and air inlet possessed by the cutting nozzle element, thus obtaining the airtightness of the nozzle by means of the inlet o-rings.

### DRAWINGS AND REFERENCES

In order to better understand the nature of the invention, the attached drawings represent a form of industrial embodiment as a merely illustrative rather than limitative example.
Figure 1 shows a section of the water jet nozzle with air maneuver in its closed position, showing how the water chamber (23) is full of pressurized water (18).
Figure 2 shows a section of the water jet nozzle with air maneuver in its open position because it is supplying an actuating air impulse (22), causing the ascent of the air piston (16a) joined in a solidary manner by means of a piston rod (16b) to the closing piston and allowing the cutting water jet (21) to be projected through the mouth (17).

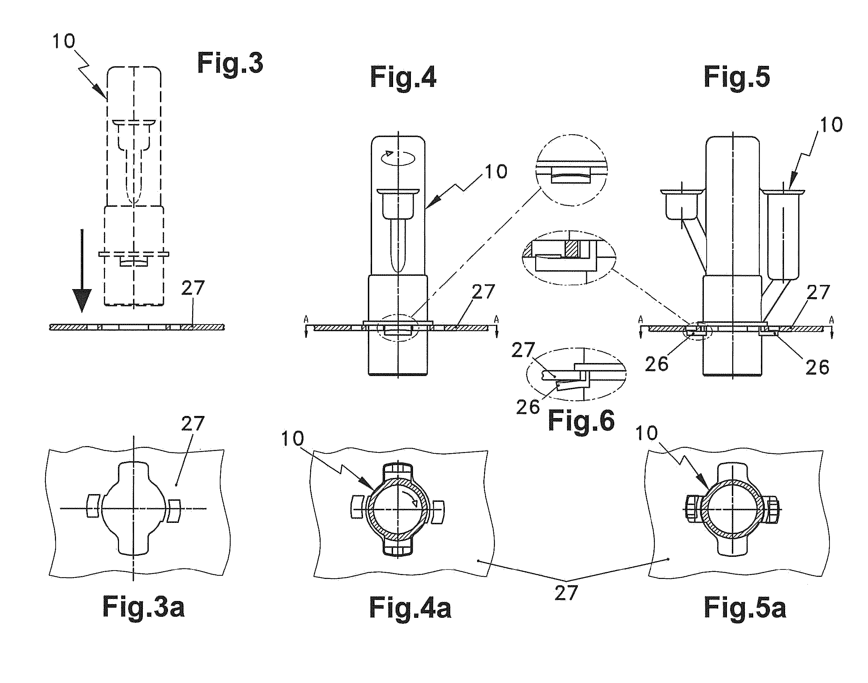

Figure 3 shows an elevated view of the cutting nozzle (10) and the base of the nozzle (27).
Figure 3a shows a plant view of the hole made in the base of the nozzle (27).
Figure 4 shows the initial position of the cutting nozzle (10) located on the base of the nozzle (27). In addition, it shows an enlarged detail of the elastic pin (26).
Figure 4a shows a plant view of the cutting nozzle (10) inserted in the hole made in the base of the nozzle (27).
Figure 5 shows the turned position of the cutting nozzle (10) located on the base of the nozzle (27), where the elastic pins (26) are fitted in the corresponding holes of the base of the nozzle (27). An enlarged detail of the elastic pin (26) fitted in the hole corresponding to the base of the nozzle (27) can also be observed.
Figure 5a shows a plant view of the cutting nozzle (10) inserted in the hole made in the base of the nozzle (27) in its final turned position.
Figure 6 shows an enlarged detail of the deformation of the elastic pins (26) during the course of the initial position to the turned position.

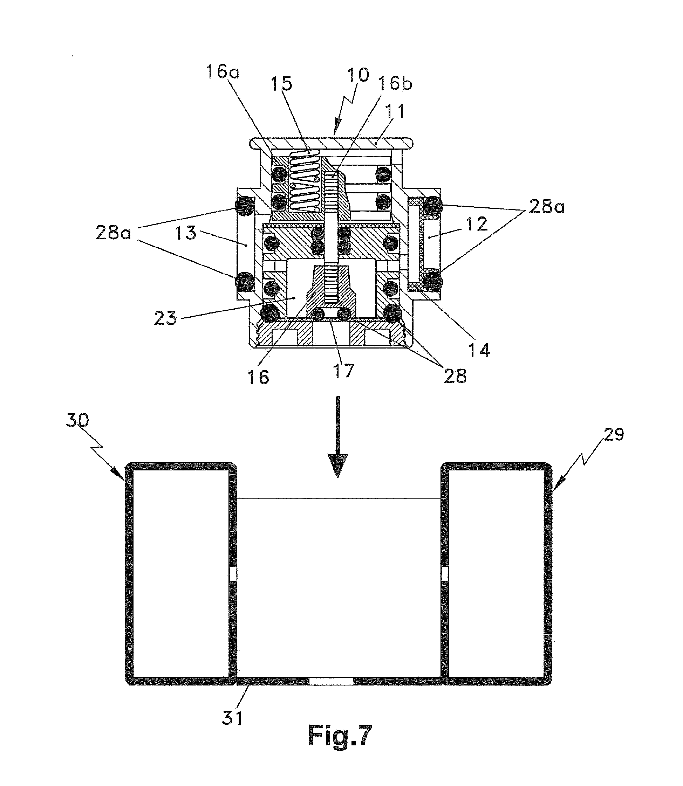

Figure 7 shows a section of the cutting nozzle (10) in its closed position and extracted from the housing formed by the water supplying branch (29), by the air supplying branch (30) and the housing base (31).
Figure 8 shows a different execution of the water jet nozzle with air maneuver found in its closed position, showing how the water chamber (23) is full of pressurized water (18).
Figure 9 shows a different execution of the water jet nozzle with air maneuver found in its open position because it is supplying an actuating air impulse (22), causing the ascent of the air piston (16a) joined in a solidary manner by means of a piston rod (16b) to the closing piston (16) and allowing the cutting water jet to be projected through the mouth (17).

The following references are indicated in these figures:
10.- Cutting nozzle
11.- Central body
12.- Pressurized water inlet
13.- Air inlet
14.- Water filter
15.- Recoil spring
16.- Closing piston
16a.- Air piston
16b.- Piston rod
17.- Mouth
18.- Pressurized water
19.- Attached water conduct
20.- Attached air conduct
21.- Cutting water jet
22.- Actuating air impulse
23.- Water chamber
24.- Water coupling fitting
25.- Air coupling fitting
26.- Elastic pins
27.- Base of the nozzle
28.- O-rings
28a- Inlet o-rings
29.- Water supplying branch
30.- Air supplying branch
31.- Housing base

### EXPOSITION OF A PREFERRED EMBODIMENT

With respect to the drawings and references numbered above, a preferred mode of execution of the object of the invention is illustrated in the attached drawings, which refers to a cutting nozzle (10) with air maneuver to make cuts in loaves of bread by means of a cutting water jet (21).

The device being proposed consists of said cutting nozzle (10) having a central body (11) with horizontally opposed air inlet (13) and pressurized water inlet (12), through which the pressurized water (18) is permanently in the water chamber (23) and is susceptible of flowing through the mouth (17) after receiving an actuating air impulse (22) in the air piston (16a), joined in a solidary manner by means of a piston rod (16b) to the closing piston (16).

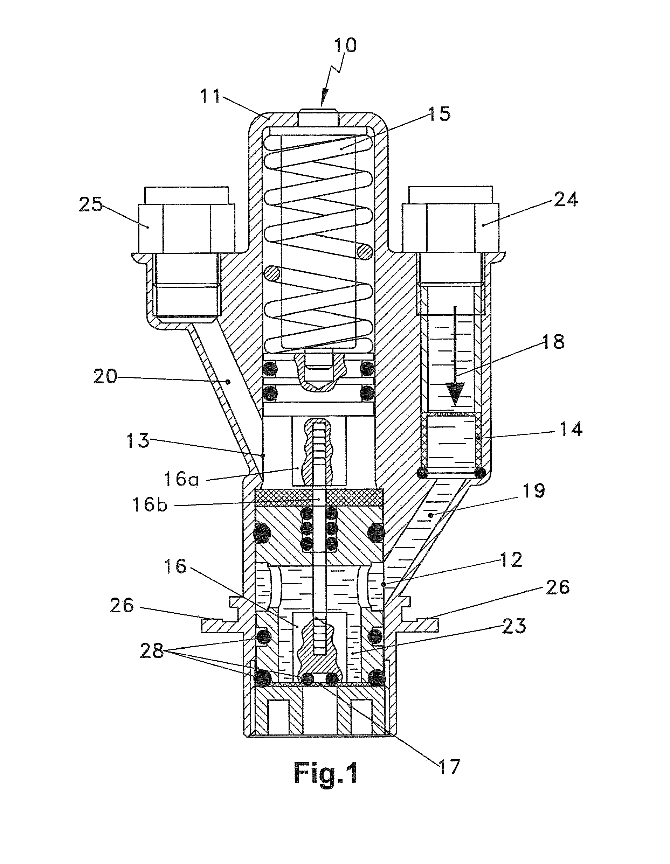

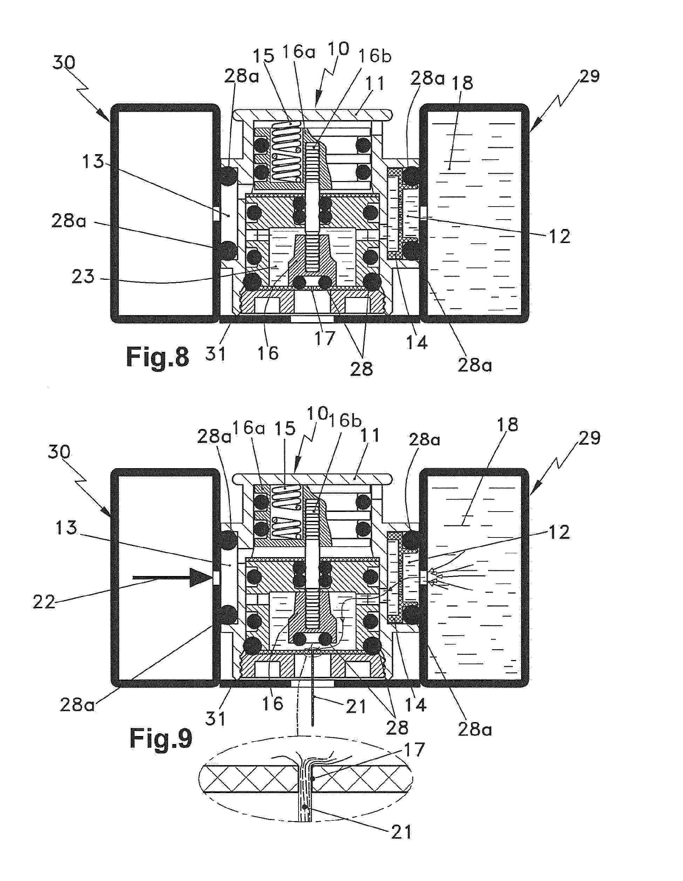

The operation of the cutting nozzle may be observed in figures 1, 2, 8 and 9, which correspond to the open and closed positions, respectively.

Figure 1 shows the water jet nozzle with air maneuver in its closed position because the actuating air impulse (22) is no longer being exerted through the air inlet (13). This way, the air piston (16a), joined in a solidary manner by means of a piston rod (16b) to the closing piston (16), interrupts the flow of the cutting water jet (21).

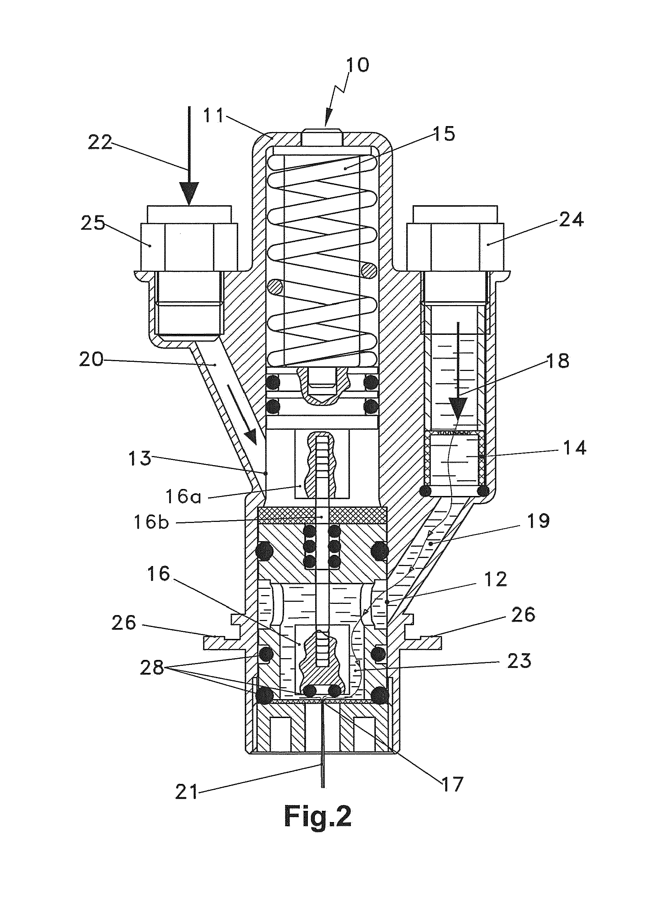

As observed in figure 2, the cutting nozzle has a constant supply of pressurized water (18) that permanently fills the water chamber (23) with water, so when an actuating air impulse (22) is introduced through the air inlet (13), the air piston (16a), joined in a solidary manner by means of a piston rod (16b) to the closing piston (16), ascends, thus allowing the cutting water jet (21) to flow through the mouth (17) with sufficient pressure to make the superficial cuts in the bread.

An advantage of this type of cutting nozzles is that their pressurized water (18) consumption is low, since cuts can be made in about 400 loaves of bread with one liter of water.

This constitution achieves an affordable water jet nozzle with air maneuver that allows great speed in the cutting of the loaves of bread. In addition, this type of nozzle does not require individual electrovalves for its operation and may be coupled to the different automatic bread-cutting machines existing in the market.

Another particularity of the invention is that it incorporates a water filter (14) in the pressurized water inlet (12).

Another particularity of the invention is that the closing piston (16) incorporates an o-ring (28) to seal the water chamber (23).

Another particularity of the invention is that the pressurized water inlet (12) is extended in an attached water conduct (19) and the air inlet is extended in the respective attached air conduct (20), both ending in their respective water coupling fitting (24) and air coupling fitting (25). This configuration of pressurized water inlets (12) and air inlets (13) provided with water coupling fittings (24) and air coupling fittings (25) allow the quick and easy substitution of any defective nozzle. Said extensions of the pressurized water inlet (12) and air inlets (13) allow the use of different water coupling fittings (24) and air coupling fittings (25) for their adaptation to the supply of water and air, so the nozzles may be used in the automatic bread-cutting machines existing in industrial baking companies.

Another particularity of the invention is that the central body (11) incorporates elastic pins (26), susceptible of fitting in the base of the nozzle (27) of supplementary configuration existing at the possible installation sites. An advantage of this configuration is that it allows the quick substitution of the cutting nozzle (10) in the case of failures.

Finally, the invention contemplates that the cutting nozzle (10) is constituted by a central body (11) that is fitted between the water supplying branch (29) and the air supplying branch (30), in correspondence with the horizontally opposite pressurized water inlet (12) and air inlet (13) possessed by the cutting nozzle element (10), thus obtaining airtightness by means of the inlet o-rings (28a).

## Claims

1. Water jet nozzle with air maneuver to make cuts in loaves of bread by means of a water jet **characterized in that** said cutting nuzzle (10) has a central body (11) with horizontally opposite air inlet (13) and pressurized water inlet (12), through which the pressurized water (18) is permanently in the water chamber (23) and is susceptible of flowing through the mouth (17) after the cutting nozzle (10) receives an actuating air impulse (22) in the air piston (16a), joined in a solidary manner by means of a piston rod (16b) to the closing piston (16).

2. Water jet nozzle with air maneuver according to claim 1, **characterized in that** it incorporates a water filer (14) in the pressurized water inlet (12).

3. Water jet nozzle with air maneuver according to claim 1, **characterized in that** the closing piston (16) incorporates an o-ring (28) to seal the water chamber (23).

4. Water jet nozzle with air maneuver according to claim 1, **characterized in that** in a possible execution, the pressurized water inlet (12) is extended in an attached water conduct (19) and the air inlet is extended in the respective attached air conduct (20), both ending in their respective water coupling fitting (24) and air coupling fitting (25).

5. Water jet nozzle with air maneuver according to the previous claim, **characterized in that** the central body (11) incorporates elastic pins (26) susceptible of fitting in the base of the nozzle (27) of supplementary configuration existing at the possible installation sites.

6. Water jet nozzle with air maneuver according to claims 1 to 3, **characterized in that** in an preferred execution, the cutting nozzle (10) is constituted by a central body (11) that is fitted between the water supplying branch (29) and the air supplying branch (30), in correspondence with the horizontally opposite pressurized water inlet (12) and air inlet (13) possessed by the cutting nozzle (10) element, thus obtaining airtightness by means of the inlet o-rings (28a).
